Europäisches Patentamt

European Patent Office

Office européen des brevets

(11) Veröffentlichungsnummer: **0 481 168 A1**

## EUROPÄISCHE PATENTANMELDUNG

(21) Anmeldenummer: **91110907.2**

(22) Anmeldetag: **02.07.91**

(51) Int. Cl.5: **F16H 63/04**

(30) Priorität: **21.07.90 DE 4023321**
**20.02.91 DE 4105157**

(43) Veröffentlichungstag der Anmeldung:
**22.04.92 Patentblatt 92/17**

(84) Benannte Vertragsstaaten:
**DE FR GB IT SE**

(71) Anmelder: **INA Wälzlager Schaeffler KG**
**Industriestrasse 1-3 Postfach 1220**
**W-8522 Herzogenaurach(DE)**

(72) Erfinder: **Schneider, Joachim, Dipl.-Ing.**
**Haydnstrasse 52**
**W-4000 Düsseldorf(DE)**

(54) **Schaltvorrichtung.**

(57) Die Erfindung betrifft eine Schaltvorrichtung für ein Getriebe, beispielsweise ein Schaltgetriebe eines Kraftfahrzeuges. Gegenüber herkömmlichen Getrieben wird die wechselweise Verbindung der Zahnradpaare mit den zugehörigen Abtriebs- und Antriebswellen über einen Spindeltrieb 16 vorgenommen. Dieser Spindeltrieb 16 besteht aus einer Hülse 23 und einem Elektromotor, wobei in einer ersten Ausführungsform der Spindeltrieb direkt in die Schaltgabel 12 eingebaut ist und die Hülse 23 mit einem Innengewindeabschnitt 18 versehen ist, welcher korrespondierend zu einem Außengewindeabschnitt 17 der Schaltwelle 11 ausgelegt ist. Die Hülse 23 ist über eine Verzahnung 26 mit einem Zahnriemen durch den Elektromotor antreibbar, wobei der Elektromotor außerhalb der Schaltwellenachse auf dem Außenumfang der Schaltgabel 12 befestigt ist. Eine Rotationsbewegung des Elektromotors und damit der Hülse 23 wird unmittelbar in eine Axialbewegung der Schaltgabel 12 umgesetzt. Diese Art der Schaltgetriebesteuerung besitzt den Vorteil, daß eine exakte Positionierung der Schaltgabel 12 mit wenigen Umdrehungen des Elektromotors erreicht wird und daß ein kontinuierlicher Übergang zwischen den einzelnen Schaltstufen des Kraftfahrzeuggetriebes erzielt wird.

Fig. 3b

EP 0 481 168 A1

Die Erfindung betrifft eine Schaltvorrichtung für ein Getriebe, insbesondere ein Zahnräderwechselgetriebe eines Kraftfahrzeuges, bei der ein frei auf einer Abtriebswelle drehbares Zahnrad durch einen axial verschiebbaren Klauenring und eine Zahnmuffe mit der Abtriebswelle kuppelbar ist, wobei der Klauenring durch eine auf einer zur Abtriebswelle parallelen Schaltwelle angeordnete Schaltgabel mittels eines elektrischen Antriebsmittels axial verschiebbar ist.

Aus der US-PS 26 47 411 ist eine Schaltvorrichtung für ein mehrstufiges Getriebe eines Kraftfahrzeuges bekannt, bei der Elektromagneten zur Steuerung der Zahnradkombinationen eingesetzt werden. Nachteilig wirkt sich hierbei aus, daß keine kontinuierliche Bewegung durch die Elektromagnete erzielt werden kann, sondern nur ein ruckartiger Übergang zwischen den beiden Schaltstellungen der Elektromagnete möglich ist. Desweiteren muß durch geeignete Maßnahmen sichergestellt werden, daß die zuletzt gewählte Schaltstufe auch im Falle eines Ausfalls der Spannungsversorgung für derartige Schaltvorrichtungen beibehalten wird.

Aus der DE-PS 28 06 904 ist eine Schaltvorrichtung für ein Mehrwellen-Schieberadgetriebe bekannt, welche zur Verschiebung der Schieberadblöcke dient. Die Schaltvorrichtung besteht aus einem Kurvengetriebe mit über Steuerkurven angetriebenen Abtriebshebeln, wobei auf der Welle eines jeden Kurvengetriebes jeweils eine der Anzahl der Schaltstellungen entsprechenden Zahl von Endschaltern und Schaltnocken zur Winkelpositionierung der Steuerkurven angeordnet ist. Die Schaltnocken und Endschalter sind notwendig, um die Schieberadblöcke in der jeweiligen Lage zu halten. Eine solche Schaltvorrichtung benötigt relativ viel Platz und ist daher für den Einbau in einem Schaltgetriebe eines Kraftfahrzeuges nicht geeignet. Desweiteren wird die Herstellung des Schaltgetriebes mit einer solchen Schaltvorrichtung erheblich verteuert.

Der Erfindung liegt die Aufgabe zugrunde, eine Schaltvorrichtung für ein Getriebe zu schaffen, welches einen kontinuierlichen Übergang zwischen den einzelnen Schaltzuständen ermöglicht und darüber hinaus einen geringeren Platzbedarf und eine Kostenersparnis bietet.

Erfindungsgemäß ist vorgesehen, daß die Schaltgabel durch einen Spindeltrieb auf der zugehörigen ortsfesten Schaltwelle axial verschiebbar ist, daß der Spindeltrieb aus einem auf der Schaltwelle angeordneten Außengewindeabschnitt und einem Innengewindeabschnitt besteht, deren Achsen auf der Achse der Schaltwelle angeordnet sind, wobei einer der Gewindeabschnitte von einem Elektromotor drehend antreibbar ist.

Durch einen Spindeltrieb wird die Möglichkeit geboten, ein kontinuierliches und ruckfreies Einschalten des entsprechenden Fahrganges zu realisieren, wobei eine Synchronisierung z.B. durch Reibschluß zwischen den Synchronringen und den Zahnrädern möglich ist. Eine axiale Verschiebung der Schaltgabel erfolgt nach dem bisherigen Stand der Technik durch ein Schaltgestänge, durch ein Kurvenradgetriebe oder mehrere Elektromagneten. Nach der Erfindung kann ein Schaltgestänge entfallen, weil die axiale Verschiebung durch einen Spindeltrieb vorgenommen wird und die axiale Bewegung der Schaltgabel zur Steuerung der Zahnradpaare durch den sich drehenden Spindeltrieb mit dem Innengewindeabschnitt auf dem Außengewindeabschnitt der Schaltwelle erreicht wird. Die Schaltwelle wird hierbei ortsfest gehalten und die Funktion des Schaltgestänges kann durch einen preiswerten und gewichtseinsparenden Schalthebel mit elektrischen Schaltkontakten übernommen werden. Ferner besteht beispielsweise die Möglichkeit, ein mehrstufiges Zahnräderwechselgetriebe in der kompakten Bauform aufzuheben und die einzelnen Zahnradpaare der Schaltstufen teilweise im Vorder- und/oder Hinterachsdifferential zu integrieren.

In einer ersten Ausführungsform der Erfindung ist vorgesehen, daß der Außengewindeabschnitt unmittelbar an der undrehbaren Schaltwelle angebracht ist und eine antreibbare Hülse axial verschiebbar und drehbar auf dem Außengewindeabschnitt angeordnet ist.

Durch die Ausbildung des Spindeltriebs mit einer Hülse mit Innengewindeabschnitt, welche drehbar auf dem Außengewindeabschnitt der drehfesten Schaltwelle gelagert, besteht die Möglichkeit, einen Elektromotor koaxial -zur Schaltwelle oder außerhalb der Schaltwellenachse zum Antrieb der Hülse anzuordnen.

In einer weiteren Ausführungsform der Erfindung ist vorgesehen, daß der Außengewindeabschnitt Bestandteil eines hohlzylindrischen Ansatzes der Schaltgabel ist, welcher drehfest aber axial verschiebbar auf der undrehbaren Schaltwelle angeordnet ist und daß die antreibbare Hülse mit ihrem Innengewindeabschnitt axial fest, aber drehbar gegenüber dem Außengewindeabschnitt gehalten ist.

Durch diese Ausführung der Schaltvorrichtung mit einem Elektromotor, der orts- und drehfest gehalten ist, wird ebenfalls eine preiswerte Alternative geschaffen, wobei die Schaltgabel einen hohlzylindrischen Ansatz mit einem Außengewindeabschnitt aufweist und die Hülse mit Innengewindeabschnitt axial fest aber drehbar auf dem Außengewindeabschnitt gelagert ist. Eine Drehbewegung der Hülse bewirkt in diesem Fall eine axiale Bewegung des hohlzylindrischen Ansatzes mit fest verbundener Schaltgabel zur Umschaltung der Getriebezahnradpaare.

Alternativ kann in weiterer Ausgestaltung der Erfindung vorgesehen sein, daß der Außengewinde-abschnitt Bestandteil eines hohlzylindrischen Rohr-stückes ist, welches ortsfest mit der undrehbaren Schaltwelle verbunden ist und die antreibbare Hülse mit ihrem Innengewindeabschnitt axial verschiebbar und drehbar auf dem Außengewindeabschnitt angeordnet und relativ drehbar, jedoch axial fest, mit der Schaltgabel verbunden ist.

Das hohlzylindrische Rohrstück ist bei dieser Ausführungsvariante ortsfest mit der Schaltwelle verbunden und weist einen Außengewindeabschnitt auf. Eine Hülse mit Innengewindeabschnitt ist drehbar und axial verschieblich auf dem Außengewindeabschnitt gelagert und drehbar mit der Schaltgabel verbunden, so daß eine Drehbewegung der Hülse unmittelbar in eine axiale Bewegung der Schaltgabel umgesetzt wird.

In Ausgestaltung der Erfindung ist vorgesehen, daß der Außengewindeabschnitt unmittelbar an der angetriebenen Schaltwelle angebracht ist und die Hülse mit Schaltgabel oder eine Schaltgabel mit Innengewindeabschnitten axial verschiebbar und drehfest auf dem Außengewindeabschnitt angeordnet ist.

Diese Lösung sieht eine angetriebene Schaltwelle mit einem Außengewindeabschnitt und eine Hülse mit Schaltgabel oder Schaltgabel im Gewindeabschnitt vor, welche ebenfalls eine sofortige Umsetzung der Rotationsbewegung in eine Translationsbewegung ermöglicht. In diesem Fall ist es jedoch erforderlich, daß für jede Schaltgabel eine Schaltwelle vorhanden ist, wie es zum Beispiel bei der aufgeteilten Lösung eines mehrstufigen Zahnräderwechselgetriebes denkbar ist.

In weiterer Ausgestaltung der Erfindung ist vor-gesehen, daß der Außengewindeabschnitt Bestand-teil einer antreibbaren Muffe ist, welche axial fest, aber drehbar auf der undrehbaren Schaltwelle angeordnet ist, wobei die Schaltgabel den Innengewindeabschnitt in einer Bohrung aufweist.

Diese alternative Lösung sieht eine Muffe vor, welche axial fest, aber drehbar auf der Schaltwelle angeordnet ist und ein Außengewindeabschnitt besitzt. Der Antrieb des Spindeltriebes erfolgt hierbei durch einen außerhalb der Schaltachse angeordneten Elektromotor mittels Ketten- oder Zahnriementrieb.

In einer weiteren Lösungsvariante ist vorgesehen, daß der Außengewindeabschnitt einer Muffe und der Innengewindeabschnitt einer koaxial angeordneten Hülse zugeordnet ist, wobei die Muffe und/oder die Hülse antreibbar sind und das nicht angetriebene Teil mittels einer Drehmomentenstütze drehfest gehalten ist oder die beiden Teile gegenläufig angetrieben sind.

In allen Fällen wird eine besonders exakte und genaue Positionierung der Schaltgabel auf der Schaltwelle ermöglicht und zudem ist der Platzbedarf so gering, daß der Spindeltrieb z. B. in der ersten Ausführungsvariante direkt in die Schaltgabel integriert werden kann.

Hierbei besteht die Möglichkeit, daß die Hülse in einer Bohrung der Schaltgabel drehbar aber axial fest gelagert und beide zusammen axial verschieblich auf der Schaltwelle gehalten sind und die Hülse eine Verzahnung aufweist, über die der Spindeltrieb von einem außerhalb der Längsachse der Schaltwelle angeordneten Elektromotor über einen Zahnriemen oder Kettentrieb angetrieben ist. Desweiteren kann zur Bewegung der Schaltgabel der Elektromotor in eine Bohrung der Schaltgabel integriert sein, wobei der Elektromotor des Spindeltriebes in diesem Fall als Hohlwellenmotor und die Hülse als innenliegender Rotor ausgebildet ist. Es kann aber auch auf die Schaltwelle ein zylindrisches Rohrstück mit einem Außengewindeabschnitt aufgeschoben sein, welches teilweise als Stator ausgebildet ist, wobei der Rotor als koaxial außenliegende Hülse mit Innengewindeabschnitt auf dem Außengewindeabschnitt gelagert ist und wobei eine drehbare Verbindung zur Schaltgabel besteht. Die Hülse bzw. der Rotor des Hohlwellenmotors kann entsprechend den aufgeführten Beispielen koaxial inner- oder außerhalb des Stators angeordnet sein.

In weiterer Ausgestaltung der Erfindung ist vorgesehen, daß der Rotor des Elektromotors aus einem dauermagnetischen Werkstoff besteht. Zuleitungen für den Rotor entfallen somit und verbilligen die Herstellung des Elektromotors wesentlich. Der Rotor kann hierbei vorteilhafterweise über Rillenkugellager gegenüber dem Stator gelagert sein. Die Rillenkugellager können gemäß einem weiteren Merkmal als Schrägkugellager ausgebildet sein, um eine große Stützweite zu gewährleisten. Die Lagerung erfolgt durch eine äußere Laufrille, die Bestandteil des Stators ist und durch eine innere Laufrille, die an den Rotor angeformt ist.

Gemäß einem weiteren Merkmal der Erfindung ist vorgesehen, daß die äußere Laufrille Teil des Stators und die innere Laufrille an den Rotor angeformt ist.

Gemäß einem weiteren Merkmal der Erfindung ist vorgesehen, daß der Spindeltrieb mit seinen beiden Gewindeabschnitten ein Wälzschraub-,Kugelschraub- oder Rollengewindetrieb ist.

Durch die Ausbildung des Spindeltriebs als Wälzschraub- , Kugelschraub- oder Rollengewindetrieb wird eine besondere Leichtgängigkeit erzielt und der Leistungsaufwand für den Elektromotor verringert. Alternativ besteht die Möglichkeit, daß das Gewinde der Innen- und Außengewindeabschnitte ein leichtgängiges, aber im selbsthemmenden Bereich arbeitendes Gewinde ist.

Die Erfindung wird anhand mehrerer Ausführungsbeispiele in den nachfolgenden Figuren näher beschrieben.

Es zeigt

Figur 1     eine teilweise geschnittene Ansicht eines Getriebesausschnittes,

Figur 2     eine Ausschnittvergrößerung Z gemäß Figur 1 mit einer Schaltgabel, einer Schaltwelle und einem Elektromotor,

Figur 3a    eine Seitenansicht eines Spindeltriebes mit Zahnriementrieb der Hülse,

Figur 3b    eine geschnittene Ansicht des Spindeltriebs,

Figur 4a    eine Seitenansicht der Schaltgabel mit Hohlwellenmotor,

Figur 4b    eine geschnittene Ansicht eines Hohlwellenmotors,

Figur 5a    einen Schnitt A-A gemäß Figur 5b

Figur 5b    eine geschnittene Ansicht eines Hohlwellenmotors mit außenliegendem Rotor,

Figur 6     eine geschnittene Ansicht eines Hohlwellenmotors mit innenliegendem Rotor und

Figur 7     eine geschnittene Ansicht eines Spindeltriebes mit einer Muffe und einem Kugelschraubtrieb.

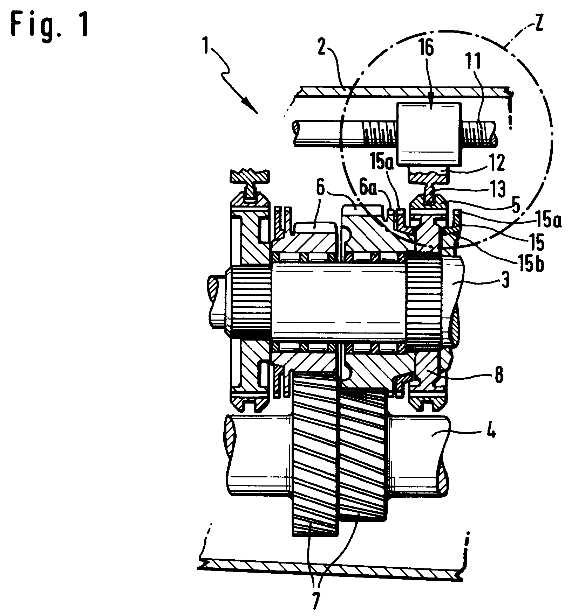

Figur 1 zeigt in einer teilweise geschnittenen Ansicht einen Ausschnitt eines Getriebes 1, beispielsweise eines Schaltgetriebes für ein Kraftfahrzeug. Das Getriebe 1 besteht aus einem Gehäuse 2, in dem eine Antriebswelle 4 und eine Abtriebswelle 3 über nicht dargestellte Lagermittel gelagert sind. Die Antriebswelle 4 wird über eine aus dem Gehäuse 2 herausragende Flanschverbindung oder Verzahnung angetrieben, wobei die Abtriebswelle 3 das Drehmoment über ähnliche Mittel weiterleitet. Mit der Antriebswelle 4 sind Zahnräder 7 drehfest verbunden, welche mit den Zahnrädern 6 der Abtriebswelle 3 ständig in Eingriff sind. Die Zahnräder 6 der Abtriebswelle 3 sind mit dieser nicht unmittelbar drehfest verbunden und werden einzeln, über eine Zahnmuffe 8 und einen Synchronring 15 mit der Abtriebswelle 3 drehfest verbunden. Jedem Zahnrad 6 der Abtriebswelle 3 ist ein Zahnrad 7 der Antriebswelle 4 fest zugeordnet. Im oberen Teil des Gehäuses 2 ist eine Schaltwelle 11 ortsfest angeordnet, auf der eine oder mehrere Schaltgabeln 12 axial verschiebbar gelagert sind. Die Schaltgabel 12 greift mit ihren Schaltköpfen 13 in eine Führungsnut 14 des axial verschiebbaren Klauenringes 5 ein, welcher auf einer innen- und außenverzahnten Zahnmuffe 8 gelagert ist. Die Zahnmuffe 8 ist über Sicherungsringe 9 axial fest auf der Antriebswelle 3 gelagert und überträgt das Drehmoment über die Innenverzahnung auf die Abtriebswelle 3. Der Synchronring 15 und das Zahnrad 6 der Abtriebswelle 3 weist eine Außenverzahnung 15a bzw. 6a auf, in die der Klauenring 5 mit seiner Innenverzahnung eingreift. Hierbei wird bei einer Verschiebung des Klauenringes 5 zunächst in die Verzahnung 15a des Synchronringes eingegriffen und über einen Reibbelag 15b der Klauenring 15, die Zahnmuffe 8 und die Abtriebswelle 3 auf eine der Abtriebswelle 4 entsprechende Drehzahl gebracht, bevor der Klauenring 5 über die Verzahnung 6a des Zahnrades 6 eine drehfeste Verbindung mit der Abtriebswelle 3 herstellt. Im Falle einer drehfesten Verbindung zwischen Abtriebswelle 3 und einem der Zahnräder 6 erfolgt eine Drehmomentübertragung somit von der Antriebswelle 4 über das Zahnrad 6, 7 und den Klauenring 5 sowie die Zahnmuffe 8 auf die Abtriebswelle 3 des Schaltgetriebes.

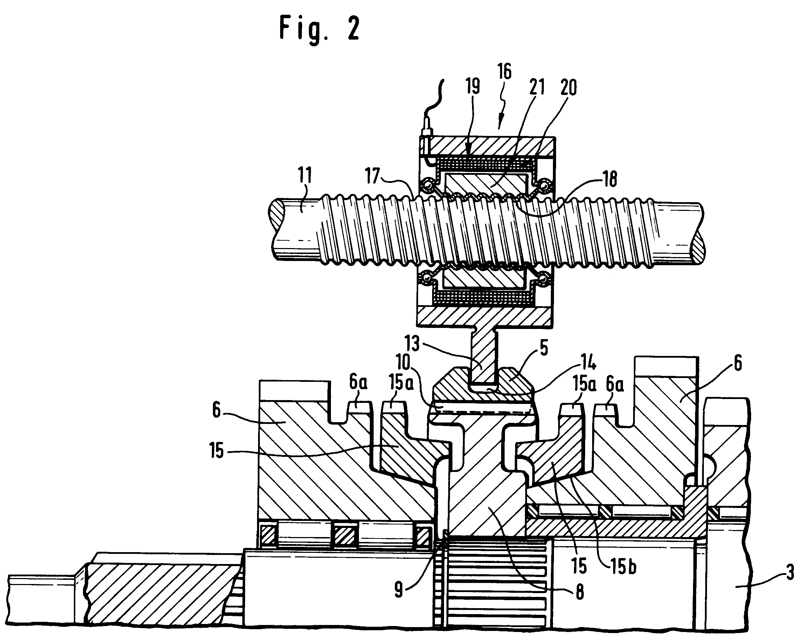

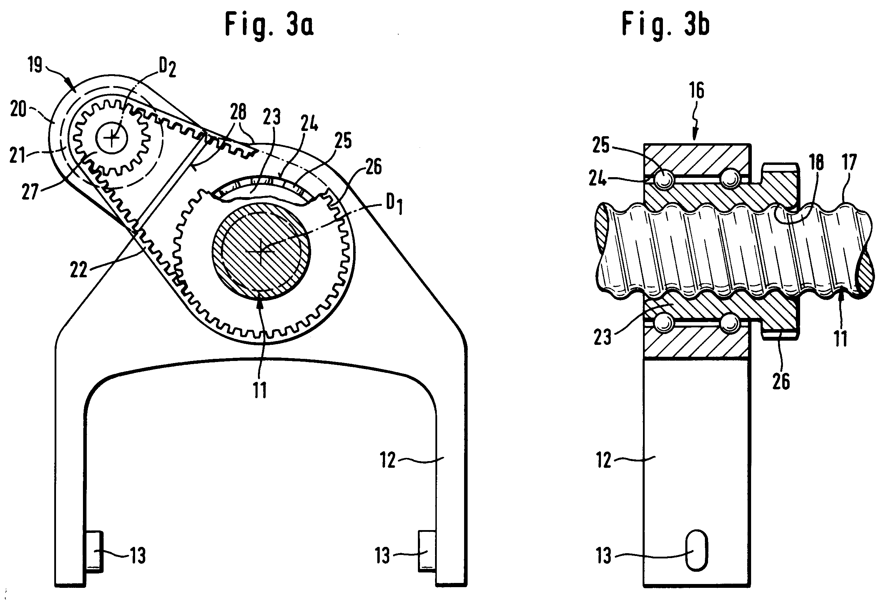

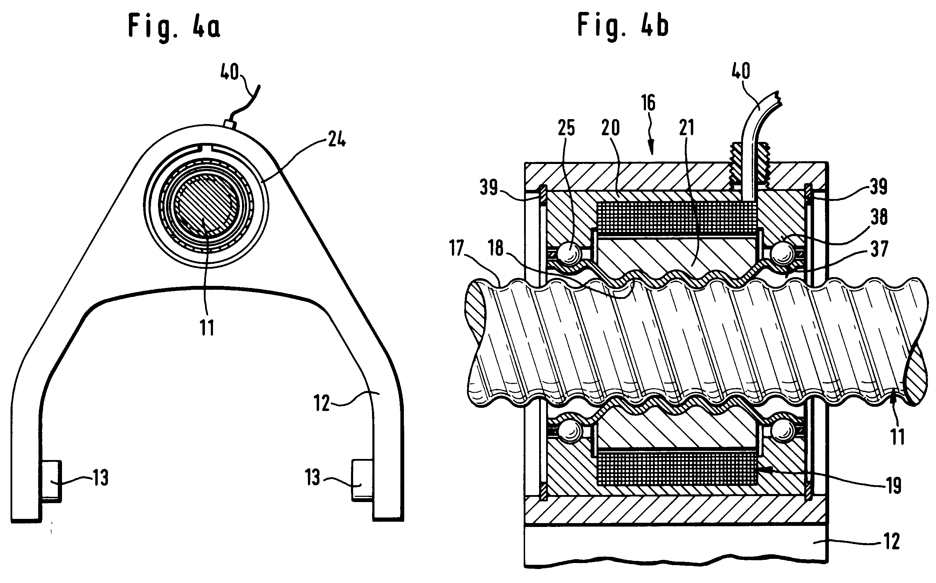

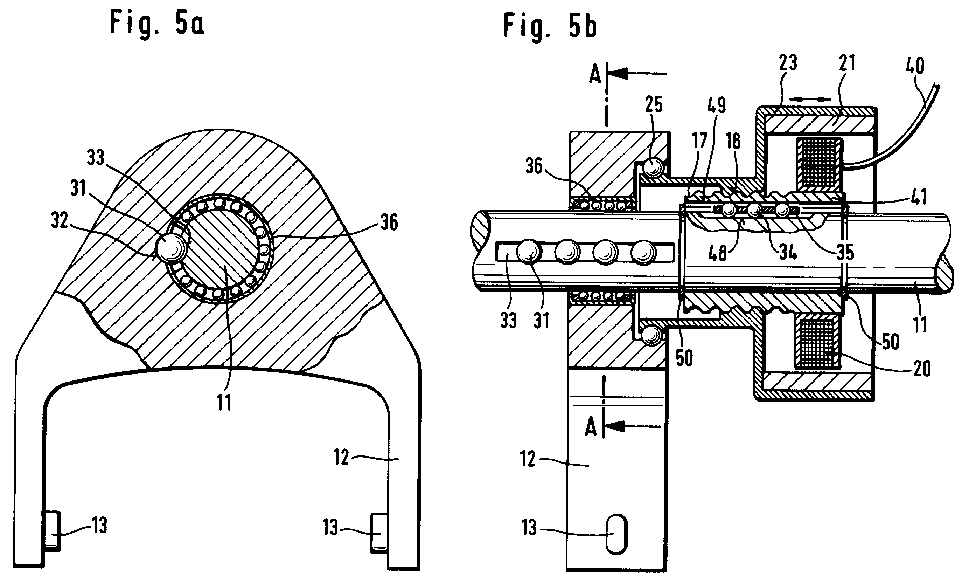

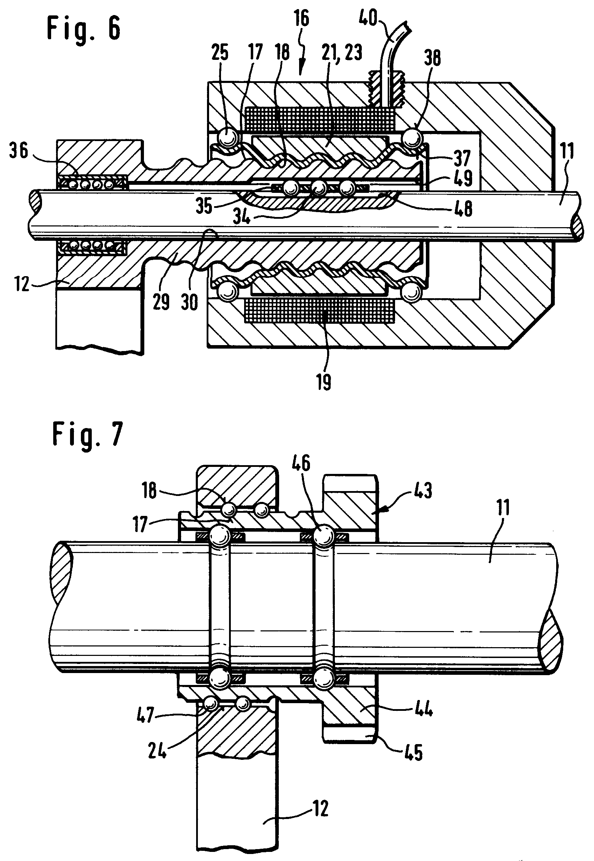

Figur 2 zeigt eine Ausschnittsvergrößerung Z gemäß Figur 1. Die Erfindung ersetzt die übliche Steuerung der Schaltgabeln 12 im Getriebe 1 durch einen Spindeltrieb 16 mit einem Außen- 17 und Innengewindeabschnitt 18 und einem drehenden Elektromotor 19, der einen Stator 20 und einen Rotor 21 aufweist. Die Schaltwelle 11 ist drehfest im Gehäuse 2 befestigt und weist einen oder auch mehrere feste Gewindeabschnitte 17 für eine erste Ausführungsform des Spindeltriebes 16 auf, die für jedes Zahnradpaar 6, 7 oder für jeweils zwei Zahnradpaare 6, 7 vorgesehen sind. Für die Außen- 17 und Innengewindeabschnitte 18 wurde ein Gewinde gewählt, welches leichtgängig ist, aber im selbsthemmenden Bereich arbeitet. Alternativ besteht die Möglichkeit, daß der Spindeltrieb 16 als Wälzschraub-, Kugelschraub- oder Rollengewindetrieb ausgebildet ist, wie beispielsweise in Figur 7 abgebildet. In Figur 3a,b ist der Elektromotor 19 mit einem Zahnriementrieb 22 für eine Hülse 23 zur Bewegung der Schaltgabel 12 dargestellt. Der Elektromotor 19, in Form eines Hohlwellenmotors ist in Figur 1, in Figur 2 in einer Ausschnittvergrößerung Z und in den Figuren 4b, 5b und 6 in einem Teilschnitt dargestellt, wobei in Figur 5 der Antrieb der Schaltgabel 12 ebenfalls über eine Hülse 23 erfolgt. Figur 7 zeigt eine Ausführungsvariante mit einer antreibbaren Muffe 43.

Figur 3a,b zeigt eine Schaltgabel 12 mit Schaltköpfen 13, die einerseits eine Drehbewegung verhindernd an der Schaltgabel 12 abgestützt ist und andererseits zum Verschieben der Synchronringe 15 in die Führungsnuten 14 der Schaltgabel 12 eingreift. Die Schaltgabel 12 weist eine Bohrung 24 auf, in der der Spindeltrieb 16 mit Hülse 23 und Innengewindeabschnitt 18 drehbar über Rillenkugellager 25 aufgenommen ist, wobei der Innengewindeabschnitt 18 auf dem korrespondierenden Außengewindeabschnitt 17 gelagert ist.

Der Antrieb der Hülse 23 erfolgt über eine Verzahnung 26 der Hülse 23 und einen Zahnriemen 22 durch einen außerhalb der Schaltwellenachse $D_1$ liegenden Elektromotor 19, der ein Ritzel 27 für den Zahnriemen 22 auf der Motorachse D₂ aufweist. Der Elektromotor 19 ist hierbei auf dem Außenumfang 28 der Schaltgabel 12 befestigt. Bei einer Drehbewegung des Elektromotors 19 wird die Hülse 23 durch den Zahnriemen 22 angetrieben und die Drehbewegung durch den Spindeltrieb 16 in eine axiale Bewegung der Schaltgabel 12 umgesetzt. Für die einzelnen Zahnradpaare 6,7 des Getriebes 1 sind mehrere Außengewindeabschnitte 17 auf einer Schaltwelle 11 oder jeweils ein Außengewindeabschnitt 17 auf mehreren Schaltwellen 11 erforderlich, wobei beispielsweise für ein Schaltgetriebe eines Kraftfahrzeuges die Möglichkeit besteht, die einzelnen Zahnradpaare 6, 7 getrennt im Vorderachs- und/oder Hinterachsgetriebe zu integrieren, so daß die kompakte Anordnung des bis heute bekannten Schaltgetriebes nicht mehr zwingend vorgeschrieben ist.

Der als Hohlwellenmotor gestaltete Elektromotor 19 gemäß Figur 4a, b ist besonders preisgünstig, weil er aus einem Rotor 21, mit einem zum Außengewindeabschnitt 17 der Schaltwelle 11 korrespondierenden Innengewindeabschnitt 18 ausgestattet und in einer Bohrung 24 der Schaltgabel 12 gehalten ist. Durch eine Drehung des Rotors 21 wird hierbei eine direkte axiale Bewegung der Schaltgabel 12 erreicht. Der Stator 20 des Elektromotors 19 muß in diesem Fall drehfest aber zusammen mit der Schaltgabel 12 axial beweglich angeordnet sein. Als Werkstoff des Rotors 21 kommt ein dauermagnetischer Werkstoff in Frage, so daß keine Zuleitungen 40 für eine Spulenwicklung notwendig sind. Figur 4a zeigt eine Seitenansicht der Schaltgabel 12 mit Hohlwellenmotor und Figur 4b zeigt in einer vergrößerten geschnittenen Darstellung den Hohlwellenmotor. Der Rotor 21 weist zwei angeformte Laufrillen 37 für ein Lagermittel, z.B. ein Rillenkugel- 25 oder Schrägkugellager auf. Der Stator 20 des Elektromotors 19 besitzt ebenfalls zwei Laufrillen 38 und ist in der Schaltgabel 12 integriert, wobei der Stator 20 zwischen Sicherungsringen 39 in der Schaltgabel 12 ortsfest gelagert ist. Im Falle einer Spannungsbeaufschlagung des Elektromotors 19 über die Zuleitung 40 erfolgt eine sofortige Umsetzung der Rotationsbewegung in eine axiale Vorschubbewegung der Schaltgabel 12.

Figur 5b zeigt eine alternative Ausführung eines Spindeltriebes 16 in einer geschnittenen Seitenansicht mit einem Hohlwellenmotor, wobei eine radial erweiterte Hülse 23 innenliegend einen Dauermagneten trägt, so daß die Hülse 23 gleichzeitig als Rotor 21 ausgebildet ist und koaxial außenliegend gegenüber dem Stator 20 angeordnet ist. Figur 5a zeigt einen Schnitt A-A mit einer Laufbüchse 36 und einer Kugelhülse 31 als Verdrehsicherung der Schaltgabel 12 auf der Schaltwelle 11. Der Stator 20 wird durch ein hohlzylindrisches Rohrstück 41 gebildet, welches drehfest mit der Schaltwelle 11 verbunden ist und einen Außengewindeabschnitt 17 sowie eine radial erweiterten Abschnitt aufweist, der die Statorwicklungen mit Zuleitungen 40 aufnimmt. Die Drehsicherung des Rohrstückes 41 erfolgt über Kugeln 34 in Kugelkäfigen 35, die in einer Linearlaufrille 48 der Schaltwelle 11 und in einer Linearlaufrille 49 des Rohrstückes 41 gemeinsam geführt sind. Zur axialen Sicherung des Rohrstückes 41 sind Sicherungsringe 50 vorgesehen. Der Rotor 21 besitzt ein radial verjüngtes Teil mit einem Innengewindeabschnitt 18, welches drehbar und axial verschiebbar auf dem Außengewindeabschnitt 17 des Rohrstückes 41 gelagert ist und einen dem Stator 20 zugeordneten erweiterten Abschnitt. Der Rotor 21 ist hierbei drehbeweglich mit der Schaltgabel 12 über Rillenkugellager 25 verbunden, wobei die Schaltgabel 12 über eine geschlitzte Laufbüchse 36 axial beweglich und über eine Kugelhülse 31 in Linearlaufrillen 32, 33 der Schaltgabel 12 und der Schaltwelle 11 drehfest abgestützt ist.

Beim Ausführungsbeispiel gemäß Figur 6 besitzt die Schaltwelle 11 keine Außengewindeabschnitte 17, sondern ein hohlzylindrischer Ansatz 29 der Schaltgabel 12 mit einer Bohrung 30 ist auf einer Außenfläche der Schaltwelle 12 axial beweglich geführt und besitzt auf dem Ansatz 29 einen Außengewindeabschnitt 17, welcher dem Gewinde der Schaltwelle 11 entspricht. Eine Führung der Schaltgabel 12 auf der Schaltwelle 11 wird durch eine in der Bohrung 30 angeordnete Laufbüchse 36 erzielt. Desweiteren befinden sich in der Bohrung 30 im Ansatzbereich 29 umfangsverteilt angeordnete Linearlaufrillen 49 und die Schaltwelle 11 besitzt hierzu korrespondierende Linearlaufrillen 48, in denen Kugeln 34 in Kugelkäfigen 35 gemeinsam geführt werden und zur Drehsicherung dienen, so daß die Schaltgabel 12 mit Ansatz 29 drehfest aber axial verschiebbar mit der Schaltwelle 11 verbunden ist. Die Hülse 23 ist als Rotor 21 eines Hohlwellenmotors ausgebildet und weist einen zum Außengewindeabschnitt 17 korrespondierenden Innengewindeabschnitt 18 auf. Der Stator 20 ist in diesem Fall ortsfest, zum Beipiel im Gehäuse 2 oder auf der Schaltwelle 11 angeordnet, damit eine Drehbewegung des Rotors 21 ein Heraus- oder Hereindrehen des Ansatzes 29 mit einer axialen Bewegung der Schaltgabel 12 bewirkt.

Figur 7 zeigt ein weiteres Ausführungsbeispiel des Spindeltriebes 16 mit einer antreibbaren Muffe 43. Die Muffe 43 ist drehbar, aber axial fest über Kugellager 46 auf der Schaltwelle 11 gelagert und weist einen als Kugelschraubtrieb ausgebildeten Außengewindeabschnitt 17 auf. In der Bohrung 24 der Schaltgabel 12 ist ein korrespondierender Innengewindeabschnitt 18 angeordnet, der über Kugeln 47 auf dem Außengewindeabschnitt 17 der Muffe 43 gelagert ist. Ferner weist die Muffe 43 einen radial erweiterten Ansatz 44 auf, der eine Verzahnung 45 besitzt. Der Antrieb der Muffe 43 erfolgt, wie bei dem Ausführungsbeispiel der Figur 3 durch einen Zahnriemen oder Kettentrieb. Ein axiales Verschieben der Muffe 43 wird hierbei durch die Kugellager 46 verhindert, so daß bei einer Drehung der Muffe 43 die Schaltgabel 12 axial bewegt wird. Die Gewindeabschnitte 17, 18 in den anderen Ausführungsbeispielen können ebenfalls durch einen Kugelschraubtrieb ersetzt werden.

Durch die elektromotorisch über einen Spindeltrieb 16 bewegte Schaltgabel 12 wird eine kontinuierliche und keine ruckartige Bewegung während des Umschaltvorganges erreicht und eine sehr genaue Positionierung der Schaltgabel 12 mit wenigen Umdrehungen des Spindeltriebes 16 erzielt. Über eine einfache Steuerung der Elektromotoren 16 kann hierbei sichergestellt werden, daß immer nur ein Zahnradpaar 6,7 die Drehmomentübertragung zwischen An- 3 und Abtriebswelle 4 übernimmt.

**Patentansprüche**

1.  Schaltvorrichtung für ein Getriebe (1), insbesondere ein Zahnräderwechselgetriebe eines Kraftfahrzeuges, bei der ein frei auf einer Abtriebswelle (3) drehbares Zahnrad (6) durch einen axial verschiebbaren Klauenring (5) und eine Zahnmuffe (8) mit der Abtriebswelle (3) kuppelbar ist, wobei der Klauenring (5) durch eine auf einer zur Abtriebswelle (3) parallelen Schaltwelle (11) angeordnete Schaltgabel (12) mittels eines elektrischen Antriebsmittels axial verschiebbar ist,

    dadurch gekennzeichnet,

    daß die Schaltgabel (12) durch einen Spindeltrieb (16) auf der zugehörigen ortsfesten Schaltwelle (11) axial verschiebbar ist, daß der Spindeltrieb (16) aus einem auf der Schaltwelle (11) angeordneten Außengewindeabschnitt (17) und einem Innengewindeabschnitt (18) besteht, deren Achsen auf der Achse ($D_1$) der Schaltwelle (11) angeordnet sind, wobei einer der Gewindeabschnitte (17, 18) von einem Elektromotor (19) drehend antreibbar ist.

2.  Schalteinrichtung nach Anspruch 1,

    dadurch gekennzeichnet,

    daß der Außengewindeabschnitt (17) unmittelbar an der undrehbaren Schaltwelle (11) angebracht ist und eine antreibbare Hülse (23) mit dem Innengewindeabschnitt (18) axial verschiebbar und drehbar auf dem Außengewindeabschnitt (17) angeordnet ist.

3.  Schalteinrichtung nach Anspruch 1,

    dadurch gekennzeichnet,

    daß der Außengewindeabschnitt (17) Bestandteil eines hohlzylindrischen Ansatzes (29) der Schaltgabel (12) ist, welcher drehfest aber axial verschiebbar auf der undrehbaren Schaltwelle (11) angeordnet ist, und daß die antreibbare Hülse (23) mit ihrem Innengewindeabschnitt (18) axial fest, aber drehbar gegenüber dem Außengewindeabschnitt (17) gehalten ist.

4.  Schalteinrichtung nach Anspruch 1,

    dadurch gekennzeichnet,

    daß der Außengewindeabschnitt (17) Bestandteil eines hohlzylindrischen Rohrstückes (41) ist, welches ortsfest mit der undrehbaren Schaltwelle (11) verbunden ist und die antreibbare Hülse (23) mit ihrem Innengewindeabschnitt (18) axial verschiebbar und drehbar auf dem Außengewindeabschnitt (17) angeordnet und relativ drehbar, jedoch axial fest mit der Schaltgabel (12) verbunden ist.

5.  Schalteinrichtung nach Anspruch 1,

    dadurch gekennzeichnet,

    daß der Außengewindeabschnitt (17) unmittelbar an der angetriebenen Schaltwelle (11) angebracht ist und die Hülse (23) mit Schaltgabel (12) oder eine Schaltgabel (12) mit Innengewindeabschnitten (18) axial verschiebbar und drehfest auf dem Außengewindeabschnitt (17) angeordnet ist.

6.  Schalteinrichtung nach Anspruch 1,

    dadurch gekennzeichnet,

    daß der Außengewindeabschnitt (17) Bestandteil einer antreibbaren Muffe (43) ist, welche axial fest aber drehbar auf der undrehbaren Schaltwelle angeordnet ist, wobei die Schaltgabel (12) den Innengewindeabschnitt (18) in einer Bohrung (24) aufweist.

7.  Schalteinrichtung nach Anspruch 1,

    dadurch gekennzeichnet,

    daß der Außengewindeabschnitt (17) einer Muffe (43) und der Innengewindeabschnitt (18) einer koaxial angeordneten Hülse (23) zugeordnet ist, wobei die Muffe (43) und/oder die Hülse (23) antreibbar sind und das nicht angetriebene Teil (23, 43) mittels einer Drehmomentenstütze drehfest gehalten ist oder die beiden Teile (23,43) gegenläufig angetrieben sind

8. Schalteinrichtung nach Anspruch 2,

dadurch gekennzeichnet,

daß die Hülse (23) in einer Bohrung (24) der Schaltgabel (12) drehbar, aber axial fest gelagert und beide zusammen axial verschieblich auf der Schaltwelle gehalten sind und die Hülse (23) eine Verzahnung (26) aufweist und ein außerhalb der Längsachse ($D_1$) der Schaltwelle (11) angeordneter Elektromotor (19) über einen Zahnriemen oder Kettentrieb (27) die Hülse (23) über die Verzahnung (26) antreibt.

9. Schalteinrichtung nach Anspruch 2, 3 oder 4,

dadurch gekennzeichnet,

daß die Hülse (23) der Rotor (21) eines als Hohlwellenmotor ausgebildeten Elektromotors (19) ist.

10. Schalteinrichtung nach Anspruch 9,

dadurch gekennzeichnet,

daß der Rotor (21) des Hohlwellenmotors koaxial inner- oder außerhalb des Stators angeordnet ist.

11. Schalteinrichtung nach einem oder mehreren der Ansprüche 1 bis 10,

dadurch gekennzeichnet,

daß der Stator (20) des Hohlwellenmotors in einer Bohrung (24) der Schaltgabel (12) integriert ist.

12. Schalteinrichtung nach einem oder mehreren der Ansprüche 1 bis 11,

dadurch gekennzeichnet,

daß der Stator (20) des Hohlwellenmotors dreh- und axial fest mit der Schaltwelle (11) verbunden ist.

13. Schalteinrichtung nach einem oder mehreren der Ansprüche 1 bis 12,

dadurch gekennzeichnet,

daß ein Teil des zylindrischen Rohrstückes (41) als Stator (20) des Hohlwellenmotors ausgebildet ist.

14. Schalteinrichtung nach einem oder mehreren der Ansprüche 1 bis 13,

dadurch gekennzeichnet,

daß der Rotor (21) des Hohlwellenmotors aus einem dauermagnetischen Werkstoff besteht.

15. Schalteinrichtung nach einem oder mehreren der Ansprüche 1 bis 14,

dadurch gekennzeichnet,

daß der Rotor (21) gegenüber dem Stator (20) durch zwei Rillenkugellager (25) gelagert ist.

16. Schalteinrichtung nach Anspruch 15,

dadurch gekennzeichnet,

daß die Rillenkugellager (25) als Schrägkugellager ausgebildet sind.

17. Schalteinrichtung nach Anspruch 15 oder 16,

dadurch gekennzeichnet,

daß die äußere Laufrille (37) Teil des Stators (20) und die innere Laufrille (38) an den Rotor (21) angeformt ist.

18. Schalteinrichtung nach einem oder mehreren der Ansprüche 1 bis 17,

dadurch gekennzeichnet,

daß der Spindeltrieb (16) mit seinen beiden Gewindeabschnitten (17,18) ein Wälzschraub- ,Kugelschraub- oder Rollengewindetrieb ist.

19. Schalteinrichtung nach einem oder mehreren der Ansprüche 1 bis 17,

dadurch gekennzeichnet,

daß das Gewinde der Innen- und Außengewindeabschnitte (17, 18) ein leichtgängiges, aber im selbsthemmenden Bereich arbeitendes Gewinde ist.

# Fig. 1

# Fig. 2

EP 0 481 168 A1

Fig. 3b

Fig. 3a

# Fig. 4a

# Fig. 4b

EP 0 481 168 A1

EP 0 481 168 A1

Fig. 5a

Fig. 5b

12

EP 0 481 168 A1

Fig. 6

Fig. 7

13

| **EINSCHLÄGIGE DOKUMENTE** | | | EP 91110907.2 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) | |
| A | DE - B - 1 450 891 (WOTAN-WERKE GMBH) * Fig. 1 * -- | 1 | F 16 H 63/04 | |
| D,A | DE - C - 2 806 904 (FRIEDRICH DECKEL AG) * Fig. 1 * -- | 1 | | |
| D,A | US - A - 2 647 411 (ALDO FILOCAMO) * Fig. 1 * ---- | 1 | | |
| | | | RECHERCHIERTE SACHGEBIETE (Int. Cl⁵) | |
| | | | F 16 H 63/00 | |
| Der vorliegende Recherchenbericht wurde für alle Patentansprüche erstellt. | | | | |
| Recherchenort WIEN | | Abschlußdatum der Recherche 29-11-1991 | Prüfer KAMMERER | |